# EUROPEAN PATENT SPECIFICATION

(11) **EP 0 898 772 B1**
(45) Date of publication and mention of the grant of the patent: **07.11.2001**
(21) Application number: 97921051.5
(22) Date of filing: 23.04.1997
(51) Int. Cl.: G09F 19/18

(54) **DIGITAL INFORMATION SYSTEM**
DIGITALES INFORMATIONSSYSTEM
SYSTEME D'INFORMATIONS NUMERIQUE

(30) Priority: 26.04.1996 SE 9601603; 02.07.1996 US 676517; 29.01.1997 SE 9700250
(43) Date of publication of application: 03.03.1999
(60) Divisional application: 00123044.0
(73) Proprietor: Dahlgren, Hylin, Jonason Media AB, 182 35 Danderyd (SE)
(72) Inventor: HYLIN, Mats, S-182 35 Danderyd (SE); DAHLGREN, Mats, S-254 38 Helsingborg (SE); JONASON, Joakim, S-181 34 Lidingö (SE)
(74) Representative: Onn, Thorsten
(86) International application number: SE9700684
(87) International publication number: WO9741546

(56) References cited:
- WO-A-93/16459
- FR-A- 2 634 295

## Description

### TECHNICAL FIELD

The present invention relates to a method and to apparatus for controlling and coordinating projectors or electronic displays in a digital information system for displaying information on at least one display device through the medium of at least one projector or electronic display for each said device, said information being displayed in places that are accessible to and/or frequented by a general public. In one particular aspect, the invention is applied to control projectors for displaying information directed towards people in such places as main railway stations, subway stations, airport waiting lounges, cinemas, private homes etc.

### DESCRIPTION OF THE BACKGROUND ART

Systems that are used to show information in the form of advertisements, timetable messages or arrival and departure times in present-day public service infrastructures with regard to buses, trains, subway traffic, etc., is of a static nature. Such information is given on notice boards, posters, charts, tables, verbally through loudspeakers, and on digital displays, etc. A characteristic feature of such information media is that the information media is not coordinated, but is in the form of individual items which are controlled and updated separately, often manually.

Modem digital displays used, e.g., in conjunction with subway railway traffic gives some of the aforesaid information but is not controlled to display advertisements, warning messages, etc. Furthermore, the information is often supplemented with verbal messages transmitted from traffic control centres. The information channel cannot be subscribed to directly for the display of external information suppliers, such as advertising bureaux, the authorities, newspapers, etc., but is processed administratively and fed manually into the information display systems.

Although the administration of information is often processed manually with the aid of modern computer technology, the available display time will nevertheless contain "dead time", among other things due to back-logging caused by the manual infeed process.

From FR-A-2 634 295 an information system with centralised management on different monitors is known. The object of this invention is to propose an arrangement for displaying information, comprising multiple display monitors, where the monitors are adapted to show different information at the same time without mutual relation. The document FR-A-2 634 295 does not propose any dynamically updating in real time of a round a clock exposure list.

Thus, present-day systems do not enable information to be updated dynamically for display in real time. Neither do present-day systems enable external mediators to update information for display in a central control system, nor yet the administrator who makes the display of information available, but that it is the administrator who determines when, where and how the information shall be displayed.

The present-day static information display systems are therefore beset with a number of problems.

Also known to the art are systems for displaying or showing picture series in local public places, such as assembly halls, lecture halls, and conference rooms in industry. The systems comprise diapositive projectors which are controlled to display pictures, images and sound in an attractive manner, often with rapid picture changes and overlaps, so as to avoid the risk of boring viewers, as with conventional display with diapositive projectors. The computer control of such systems may well be both complicated and advanced. Unfortunately, these systems are nevertheless static insofar as they are used in one and the same locality and controlled and managed on the display site. The display must be planned carefully beforehand, this planning often being carried out by experts within the technical field in question, so as to obtain a finished display product. For instance, when a company wishes to change its display and introduce a new picture series combined with sound, the process again becomes static by virtue of the need to employ experts to program and arrange the new display.

The same problem as that mentioned above is also met when showing pictures through diapositive projectors in one and the same locality, because the display subscriber has very little chance of influencing the display, especially in real time. The picture display is directed towards a limited public and towards scheduled display of one and the same information material to the public concerned. The picture display is not directed to a large number of people, as in the case of a railway station platform, a subway platform or in airports. In places of this nature, it should be possible to spread the information and to display different information in different places within said stations and it should be possible to update and change the information quickly. When the information displayed on said stations is not effectively coordinated, the displays on which information is presented will often become static, for instance show the time of the next display or show a pause picture, i.e. dead time. This becomes nerve-wracking to travellers, who often wait for long periods in waiting halls or stand on platforms. Neither is the failure to utilize expensive information display equipment to the highest possible degree compatible with good economy.

Further, It is a known problem when new films or movies are to be released att different locations such as cinemas that there are pirate copies made when the movies or films are distributed to the locations where they are going to be displayed to the public.

Still further, the advertisement sent at cinemas during the projection of a film is static, i.e. not instantly changeable.

Also, for advertisement on television the same drawbacks as for other systems are valid e.g. concerning changing of advertisement spots.

### SUMMARY OF THE INVENTION

An object of the present invention is to provide a flexible system in which external information mediators are able to dynamically control in real time the transmission of display instructions to a larger public in different places situated at any chosen distance apart through projectors or electronic displays which project information onto displays intended herefor.

Another object of the invention is to enable pictures, images, messages and announcements to be configured in accordance with modern digital technology, therewith providing rapid communication.

A further object of the invention is to enable a picture, image or other information to be changed in practice as often as is desired, in real time, therewith providing direct and immediate communication, and to enable similar or specific information to be displayed in places that are mutually far apart and to enable message information to be alternated with advertising spots, for instance.

According to one aspect, the present invention relates to a method of coordinating and controlling projectors or electronic displays in a digital information system for displaying information on at least one display device through the medium of at least one projector or electronic display for each such display device, said information being displayed in places that are generally available to and frequented by a general public.

Information display subscribers are connected to a computerized control centre via computer and telecommunication interfaces for all-day-round transmission of information, wherein the control centre has a communication interface against computerized devices situated in connection with said places for projector or electronic display coordination and control.

The control centre creates and updates a display list in real time with control instruction fields via booking information for display dynamically in time from mediators having drive routine means which are connected to the subscription and which are transparent for the transmission of information to the drive routine means of the control centre for transmission of information in the system.

The display list, which includes control instructions, coordinates and controls the projectors or electronic displays concerned with regard to what shall be displayed, when it shall be displayed, where it shall be displayed and for how long it shall be displayed, whereby each projector or electronic display, independently of other projectors or electronic displays, receives the same or different information for display through respective projectors or electronic displays and through the computerized devices, in accordance with the display list.

The administrator of the digital information system is able to update the display list with desired information at any time whatsoever, wherein the dynamic booking can be changed or delayed.

The projector or electronic display may also interrupt display of information when the allocated display devices, or the projector or electronic display, is/are visually obstructed in said public place. The projector lens can then be covered with a protective device when a dirty atmosphere is detected or anticipated and which is immanently likely to dirty the lens.

In one embodiment, the projectors or electronic displays provided with a projector or electronic display computer which controls and delivers exposures to the projectors or electronic displays controlled by a server included in the computerized device, wherein the projector or electronic display computer has a buffer memory which is filled with subsequent exposures as the exposure to be displayed at that moment via the projector or electronic display is emptied from the buffer memory.

Alternatively, a server included in said computerized device is provided with a projector or electronic display computer which controls and feeds exposures to the projectors or electronic displays, wherein the projector computer is connected to a buffer memory which is filled with subsequent exposures as the exposure current at that particular moment is displayed through the projector or electronic display and emptied from the buffer memory.

A server situated in a specific place and included in a computerized device further includes databases, and information in the databases concerning exposures in the exposure list is copied in databases of servers in a selected number of computerized devices situated in other places.

In one embodiment, the exposure list may include reserved instruction fields for updating with control instructions via the mediator interface, wherein the control instructions can be placed in a waiting line, or queue, when the exposure list lacks instruction updating fields at that moment in time.

In another embodiment of the invention, a switch detects when a station computer is not functioning, wherein those projectors or electronic displays controlled by the station computer are controlled by another station computer situated at some other place.

A further embodiment can also be used as "feedback" and monitoring in statistical analysis by a system administrator with respect to whether or not vehicles keep to the timetable, when the display of information is interrupted either because the display device is obstructed or because the projector is obstructed. In one embodiment, the computerized devices comprise an electronic display with control computer, wherein projectors are comprised of electronic displays.

Every projector or electronic display is in one embodiment of the present invention assigned to a unique address. The addresses can be of the type TCP/IP.

Further, the present invention may comprise that addresses to a specific projector or electronic display are stored on a smart card which can be read by the computerized devices such as projector computers or control computers with built in smart card readers.

The present invention also relates to an arrangement of apparatus for carrying out the aforesaid method, said apparatus including the aforesaid devices and an exposure handler which creates the exposure list.

### BRIEF DESCRIPTION OF THE DRAWINGS

The following description makes reference to the text in the accompanying drawings to provide a better understanding of the embodiments of the present invention, said drawings illustrating schematically a system for coordinating and controlling projectors in a digital information system for displaying information in accordance with the invention.

### DETAILED DESCRIPTION OF PREFERRED EMBODIMENTS OF THE INVENTION

The present invention relates to a method for the dynamic coordination and control of projectors in a digital information system for displaying information on at least one display device via at least one projector for each display device, wherein the information is displayed in places that are accessible to and frequented by a general public. The invention also relates to an arrangement of apparatus for carrying out the method.

It is to be understood that the projector itself can be a digital display device or incorporated in a digital display device such as an LCD-display, a digital television set etc.

Although implementation of embodiments are limited in the following to subway railway stations, it will be understood that the invention is not restricted to these embodiments. As before mentioned, the inventive system can be used in places where large sections of the public are known to visit or look at advertisement, such as railway stations, airports, outdoor locations, cinemas, in homes looking at television etc., in addition to subway stations.

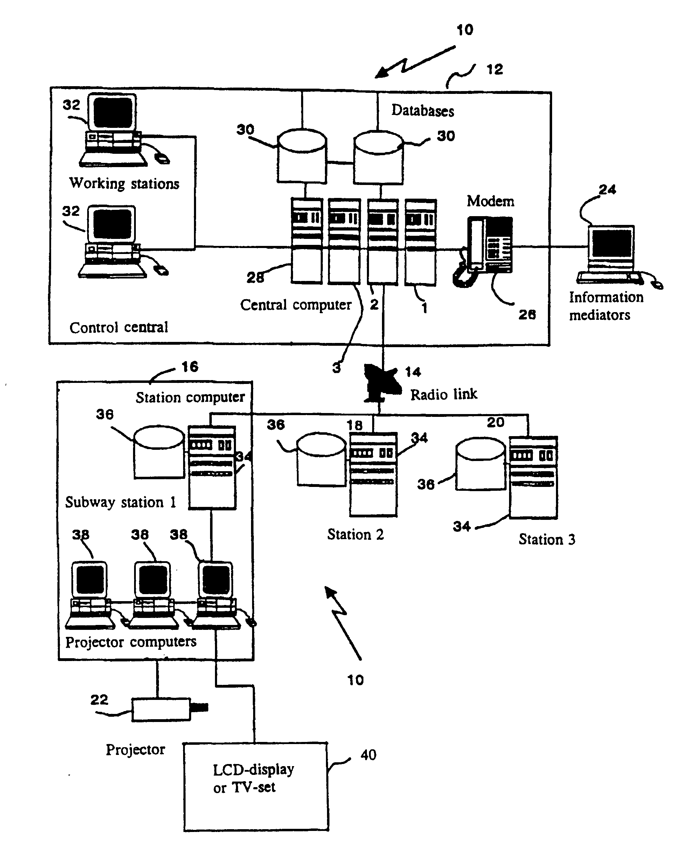

Preferred embodiments of the invention will now be described in detail with reference to the accompanying drawings, which illustrate schematically a system 10 for coordinating and controlling projectors in a digital information system for displaying information on display devices, such as free-standing picture screens, wall-mounted screens, walls, and overhead screens or other means suitable for reproducing or exposing picture information in the form of text, stills, movable pictures, images, etc. (displays not shown in the drawing).

In the main, the system is comprised of a control centre 12 having a communication interface 14 which connects an unlimited number of computerized devices 16, 18, 20 which are placed at desired distances from one another for the control of projectors 22, or as mentioned other projectors such as LCD-display, TV-set 40 etc., whose projector images or pictures are displayed in the aforesaid public places.

The illustrated system also includes an advertising agency which is connected to the control centre 12 through the medium of a computer 24 and a modem 26. Although only one modem is shown connected to the central computer 28 of the control centre, it will be understood that modem poles, telephone switching centres and other similar devices may be used to this end in accordance with present-day techniques.

The central computer 28 in the control centre 12 also includes databases 30, in the illustrated case two databases. The databases 30 may be externally connected to the central computer. The control centre also includes working stations 32, which are preferably connected to the central computer 28 via a Local Area Network (LAN) in accordance with known techniques. The working stations 32 are used by the personnel serving the control centre 12, in monitoring, checking, maintaining and updating functions in the central computer with its databases. The control centre administrator is able to insert projector control instructions via the working stations, for instance when information is directed specifically to travellers and passengers travelling by ship, train, subway, aircraft or some other vehicular traffic who require specific information. The information may concern the arrival times and departure times of passenger-carrying vehicles. The administrator controls internally how, what, when or where the information shall be displayed by the projectors 22. An important feature in this context, however, is that external information mediators 24 are able to give control instructions to the projectors 22 with regard to the information that the external mediators 24 desire the system 10 to display via the projectors 22, each on its own initiative and communication-wise transparent via modems 26. This can be achieved in accordance with one embodiment of the invention without involving the working stations 32 in the procedure of transmitting the control instructions to the central computer 28.

The term information mediator 24 used in the following shall be interpreted in its widest meaning, i.e. as not only referring to advertising agencies but to all companies and private persons who wish to utilize the system 10 for commercial reasons or for the display of information that concerns a general public. At present a mediator which wishes to display information in public places is normally forced to wait about two weeks, perhaps longer, before his order can be implemented and the information publicly displayed. With the inventive digital information system 10, the information can be displayed principly in real time, i.e. at the time of making the order, possibly with a short delay due to processing, fullybooked exposure lists and other quickly passing causes. Furthermore, an external information mediator 24 is able to put through information to the system 12 twenty-four hours a day, whereupon the information can be included instantaneously in an exposure list, as illustrated in more detail below.

Those external information mediators which connect to the control centre 12 via modems are, in one embodiment of the invention, connected to the control centre via specially designed interfaces (drive routine means) for data and telecommunication. In this way, only external mediators 24 having the correct interface are able to connect transparently to the control centre 12 for delivering control instructions to the projectors 22, which avoids unauthorized access to the display of such information and misuse of the system. In this regard, the special interface, which may be included in the computers of external mediators, also includes commercially available code keys or other codes sent between the control centre 12 and the computer 24 of the external mediator to verify the right to enter control instructions into the central computer 28, without the administrator needing to supply through the working stations 32 further information or authority permitting access of the external information mediators 24 to the central computer for transmitting system transparent control instructions to the projectors 22.

In accordance with the invention, the control centre 12 has a communication interface 14 against the computerized devices 16, 18, 20 situated on shifting positions or places for projector coordination and control.

The drawing shows specifically a radio link which forms an interface between the control centre 12 and the computerized devices 16, 18, 20, this interface being a preferred interface, although not necessarily the sole possible interface. Other interfaces for transmitting information between the control centre 12 and the computerized devices 16, 18, 20 may consist of a cable-carried ISDN solution (Integrated Services Digital Network) or other fixed lines that have the same capacity.

In one embodiment of the invention relating to subway station 1, the computerized device 16 is comprised of a station computer (server) which either includes or is connected externally to a hard disk 36, wherein the station computer 34 is connected to a plurality of projector computers 38, three such projector computers in the illustrated case, which transmit control information to connected projectors 22, only one of which is shown. The projector computers 38 have the form of PC units with picture screens in the illustrated case. The information sent to projectors 22 can be monitored on the picture screens of the PC units 38 and edited by personnel stationed at different locations within the subway station 16, or from a central location. In the illustrated embodiment, station 2, referenced 18, and station 3, referenced 20, comprise other subway stations that are equipped with devices similar to the devices of the subway station 16, although without showing the projector computers 38 and the projector 22. It is assumed, however, that these stations also include projector computers 38 and at least one projector 22.

In an alternative embodiment of the device or devices 38, i.e. the projector computers 38, included in the station computer 34, the projector or projectors 22 is/are controlled directly from the station computer 34.

In yet another embodiment of the devices included in the computerized devices 16, 18, 20, the projector 22 is replaced with an electronic display (not shown), such as a large picture screen in LCD technology, light-emitting diode technology (LED technology) or the like. The station computer 34 is then included in the large picture screen or is connected externally thereto. Preferably, the projector computers 38 in the station computer 34 and the database 36 are also included. Information is transmitted from the control centre 12 generally in the same manner as that before described. However, each separate large picture screen may be addressed directly through a radio network 14, wherein the screens are controlled from the control centre 12 which includes redundancy. Thus, in the illustrated case, the computerized devices 16, 18, 20 form an electronic display with control computer 34, said projector 22 effecting the display.

According to one embodiment, the computerized devices 16, 18, 20 may include redundancy by virtue of all databases 36 or hard disks on the stations 16, 18, 20 including the same projector control information or instructions for monitoring the system in a subway station 16, 18, 20. Thus, all information is copied between the station computers 34 and their databases 36 via the communications interface 14 from the central computer 28. This means that a computerized device for displaying information in a subway station via projectors 22 will not be disabled should one or two of the stations shown in the drawing suffer a computer or hard disk power down in a station computer 34. In the event of a power down in a station computer 34, the communications interface 14 can be coupled to a switch which automatically bypasses the station computer and connect projectors 22 connected to the power down computer 34 to one of the station computers 34 that is still in function (the switch is not shown in the drawing).

The digital information system 10 has been described in the aforegoing with regard to respective hardware and interfaces. Implementation of the present invention in achieving the objects and purposes thereof will now be described more specifically.

The illustrated central computer 28 is divided into three powerful servers 1, 2, 3, of which server 1 receives material from external information mediators 24, via modems 26. Server 2 sends information material to the station computers 34. The same material can be sent to all station computers 34, even though the information is to be displayed solely on a given display or on given displays. What shall be exposed and where it shall be exposed will be explained in more detail below.

Server 3 functions to process information and control instructions received from the information mediator 24, as described in more detail blow.

The server 3 of the central computer 28 functions partly as an exposure handler. The exposure handler 3 carries out the important object of the invention with regard to the possibility of an external mediator 24 to organize the information delivered to the station 16, 18, 20 via an exposure list, this organizing of information being effected in real time via the modem 26 and the server 1 that receives projector control information from the external mediator.

In one invention of the invention, a queue, or line, is created from the information material received by the server 1, in accordance with some known line or queuing method, such as FIFO (First In First Out), LIFO (Last In First Out) or Round Robin, etc., wherein the server 3 or exposure handler 3 has set-up or created an exposure list which covers a twenty-four hour period for information exposure or display via projectors 22. The exposure handler 3 collects and processes, i.e. allocates, information relating to projector control instructions, wherein mediator information is sorted into the exposure list in accordance with the wishes of the mediator 24 or its instructions, when available space is found in the exposure list or in alternative places in the exposure list given by the mediator. If the exposure list is completely filled with instructions, the mediator instructions to the control centre remain in the queue list in the servo 1 in readiness for later inclusion in the exposure list, in accordance with a preferred embodiment.

In one embodiment of the invention, the exposure handler 3 creates or allocates a data message (data field) including a header, a control character field, an address field, optionally at least one CRC field (Cyclic Redundancy Code), and optionally status flags which identify and are connected to the information from an information mediator 24 and filed in the exposure list in the time interval that the information shall be exposed or displayed through a projector 22. This constitutes an alternative to the insertion of the entire information bit from an external mediator 24 in a specific time interval in the exposure list, and enables the provision of an exposure list that contains much less information and which is thus easier to handle, and to accelerate transmission of the list between computers and databases included in the system.

A data message in the exposure list can be understood here as being a control instruction in an instruction field for activating projectors 22 to project information.

A data message of this kind connected to each individual information exposure enables known HASH or switching methods to find information included in the exposure time intervals in the exposure list both effectively and quickly. A First Class® server can be used conveniently for communications transmission between external information mediators 24 and the control centre 12. Each external information mediator is then able to send an e-mail with included information material in any chosen format, which provides the advantage of not needing to write in any new software for the communication transmission function. As before mentioned, the system also incorporates a safety aspect, whereby each external information mediator that has an office or who subscribes to the system must possess a coded drive means or a coded drive routine in order to connect to the control centre 12.

In order for external information mediators 24 to be able to deliver complete pictures/films, the mediator will preferably have its own versions of the software that the exposure handler 3 uses for enabling pictures/films to be introduced transparently into the exposure list without processing via the working stations 32 in the control centre 12.

In one embodiment of the invention, there is thus included an additional alternative to the dynamic updating of the exposure list, not excluding the dynamic updating, as mentioned in the aforegoing, i.e. the external information mediators 24 which do not have access to software in the exposure handler are provided with the possibility of having their picture material or exposure material processed by personnel serving the working stations 32, wherein said personnel enter, via the working stations 32, the information that the external mediator 24 wishes to have exposed, or displayed, via projector control instructions in the exposure handler and via the exposure list created by the handler. Personnel at the working stations 32 are thus able to interrupt any queue lists in the server 1 to update the exposure list, via the exposure handler, with information generated centrally from the control centre 12 or with information that is insufficiently processed when received by the server 1 from the external information mediator 24.

In accordance with the aforegoing, external information mediators 24 that have access to the exposure program are able to deliver complete picture series/films which can be processed automatically and inserted into the exposure list, or optionally personnel administering the working stations 32 are able to pick external mediator information from the queues, or lines, and process this information so that it can be inserted into the exposure list via the exposure handler 3. In order to be able to distinguish information that must be processed via the working stations, external mediators 24 can mark or label such transmitted material with an appropriate code, so that the central computer 28 is able to identify this material and send it to working stations 32 for processing. Alternatively, e-mail is processed and registered as information which must be processed.

According to the invention, sensors may be placed in the close vicinity of projectors 22, such as to detect any obstacle that may prevent projectors 22 from displaying information on screens (not shown). These sensors are connected to projector computers 38, so as to enable said signals to be transmitted to the station computer 34. Alternatively, the sensors may be connected directly to station computers 34. The sensors are of a typical kind which detect the presence of obstacles, for instance optical sensors which detect when a light beam is broken, microphones, electromagnetic transmitters or ultrasonic transmitters having one or more receivers, etc.

When a sensor (not shown) registers the presence of an obstacle between a projector 22 and a cloth screen or some other display surface, the projector is stopped from projecting pictures during the time that the obstacle is present.

The sensor may also function to place a cover in front of the projector lens, so that dust, dirt or the like cannot come into contact with the lens or the display screen when the projector 22 is not a camera.

In the present case, the display that exposes the information, e.g. a cloth screen, has a size of 4200 x 3000 mm, which corresponds to the surface area of a present-day large screen. The screen cloth may have a reflex foil affixed thereto, or may be coated with some other form of reflective material to enhance luminescence. The screen cloths are illuminated with an OH-projector 22 for instance, which is preferably mounted on the ceiling of a subway station with the aid of a special mounting means, wherein the optic is especially ground and/or provided with a filter for correcting optical effects, such as reflections from the surroundings and other disturbing light. The projectors 22 project the information material onto the screen cloth, wherein a cover is moved in front of the optic lens to protect the same against dust and dirt, for instance when a train enters alongside the platform.

Pictures are transmitted to displays or to exposure means digitally via a specially designed computer program.

All projectors 22 are able to show individual pictures or a collective picture via all projectors 22 simultaneously.

When the information mediator 24 is an advertising agency and the advertisements are to be displayed are in picture form, the advertising subscriber is able to buy a number of spots which are shown in the exposure list. The spots are shown, e.g., for a ten-second period, where, e.g., each sixth spot is a spot used by the transport company operating the subway, wherein this spot can be used partly for advertising purposes and partly for information purposes. The advertising subscriber may buy spots individually or in a special package, and the digital information system is able to insert a change at short notice or to operate a completely new spot. The system is thus highly flexible and enables quick changes to be made with regard to what shall be exposed on the exposure means, where it shall be exposed and when.

Computer-produced pictures or exposures are delivered by external advertising agencies/newspaper agencies, etc., for exposure, or showing, in subways for instance. The pictures are received by a control centre 12, which includes information material storage media. The control centre also decides what shall be exposed and in which order, and distributes the information material to the subway station 16, 18, 20. The control centre 12 is also able to refrain from displaying information which conflicts with "good order" or accepted morale and of a disturbing nature to the large majority of the public, possibly through the medium of working stations 32 and via control routines. The display of such information can also be prevented through the medium of the contracts signed by external information mediators 24 when obtaining an account or a subscription.

The exposures are received on respective stations by a station computer 34 (station server), wherein each projector 22 has an individual projector computer 38 which controls and feeds pictures to the projector or projectors 22. Projector computers 38 are controlled by the station computer 34. The communications interface 26 between advertising agencies and the control centre 12 is comprised of a communications modem 26, modem poles, switching centres, etc. According to the invention, the interface between the control centre 12 and the station 16, 18, 20 is comprised of a radio transmitter with receiver.

Each means for exposing, or showing, information sent from the projectors 22 can be individually controlled. The control centre 12 sends picture packets/information to the station computer 34 together with an exposure list. The exposure list includes a series of instructions as to what shall be shown, where it shall be shown, when it shall be shown and for how long, etc. The station computer 34 then provides each projector computer 38 with the material to be exposed. Thus, one and the same information material can be shown on all screens, or certain screens can be chosen for specific information display. This facility is controlled via the exposure list or, when the need is acute, directly from the control centre 12.

Those screens that are obstructed, e.g., by incoming subway trains, shall be "extinguished" during the time the train is located in the station. Synchronization in this regard is controlled by the station computer 34. This enables screens that are not obstructed to continue to receive exposure information from projectors 22.

In addition to exposing pictures in different standard formats, for instance in PICT (Picture Format), EPS (Encapsulated Post Script), TIFF (Tagged Image File Format), etc., the digital information system is also able to expose Quick Time® film, video film and transmit sound.

In one embodiment of the invention, the resolution is 1048 x 680 dpi, which constitutes a standard with advertising agencies for still pictures and picture sequences. The system is also able to display video film, which can now be recorded directly into a Macintosh® having a PCMCIA card (Personal Computer Memory Card International Association card). With regard to sound via a CD or some other source, the CD quality in stereo applies, 44 kHz.

The projector computer 38 informs the station computer 34 of the projector address, picture number/name, exposure duration and the time of the exposure, through the medium of function control means in said station computer. In the event of a malfunction/mains failure or a power cut, the station computer 34 reports this occurrence to the control centre 12. The central computer 28, in turn, monitors the station computers 34 at regular intervals.

The information material to be exposed, or shown, is down-loaded from the control centre 12 to the station computers 34. Because each projector 22 has its own projector computer 34, information material can be sent to the station computer 34 at any time in a calendar day without disturbing exposure on the station 16, 18, 20. When necessary, the exposure list can be changed or stopped in respect of all projectors 22 or in respect of certain projectors for showing specifically chosen information.

The computers 34 include counters which function to register, e.g. in tables or other registers, the length of time over which the information concerning each external information mediator 24 has been exposed, or shown. Thus, when so considered by an administrator, the mediator 24 need only pay for the actual time over which the information was displayed and is not required to pay a single down payment for, e.g., round-the-clock display over a seven-day period, as is at present the case.

According to one embodiment of the invention, the hardware is comprised of a number of powerful servers which form a central computer 28, said computer 28 and servers 1, 2, 3 essentially carrying out the following procedures.

The server 1 receives material from the advertising agencies, via modems, for instance.

The server 1 sends information material to the station computers 34, wherein the same information material can be sent to all stations even when the information shall be shown solely on a given screen or screens. The information to be displayed is determined by the exposure list sent to the station 16, 18, 20 with the exposure or picture material, which is effected via the server 2.

The exposure material or picture material (and other information), the exposure list, etc., are prepared in the exposure handler which is included in the server 3 in accordance with the aforegoing.

Each server 1, 2, 3 will preferably have its own array of databases 30, for instance external hard disks with sufficient storage capacity. All material is copied therebetween. This will result in redundancy, since each exposure or picture will occur in at least three copies. Copying between the databases 30, 36 can be effected automatically, with each newly arrived or changed file containing information being copied in the remaining databases.

The information material is received by respective stations 16, 18, 20 in a station computer 34 (server). The station computer 34 feeds exposures or pictures to the projector computers 38 in accordance with the exposure list. As before mentioned, this server also activates the extinguishing of a display while a subway train is located in the station and in reporting checks/malfunctions to the control centre 12.

In summary, the following hardware is required in the illustrated embodiment; three central servers 1, 2, 3 plus large databases 30, for instance three hard disks each of 27 GB. The server 1 is connected to the information mediators via modems, wherein a First Class® server is recommended with regard to promoting user-friendliness.

A number of working machines or working stations 32 are connected to the central computer 28 for controlling, communicating and processing of exposure or picture material, generating exposure lists through the exposure handler when required, and so on. Alternatively, the information mediators 24 may have their own versions of the exposure program used, thereby enabling the mediators to deliver finished picture sequences/films transparently. These picture sequences/films need not then be prepared in the control centre 12, but can be filed dynamically in the exposure list by the exposure handler.

The illustrated embodiment also includes a radio system which includes a transmitter and a receiver for each station 16, 18, 20, wherein at least two channels will preferably be made available, one channel for transporting exposure or picture material and one channel for communication with the control centre 12. This obviates the need of interrupting picture transmission from the control centre 12 in order, e.g., to enter emergency messages or for entering check reports from the station computers 34.

The station computers 34 are responsible for communication with the control centre 12 and supply the project computers 38 with information material or exposure material and handle control routines in the stations 16, 18, 20. The projector computers 38 deliver pictures to the projectors 22 and monitor the function of the projectors. In this case, the exposure information for the pictures can be fed from the station computer 34 in packets. When a packet has been exposed, it is erased to make room for the next packet. Alternatively, there can be used a computer 34 that has sufficient capacity to store all pictures that are to be exposed. This assumes, however, that the entire picture stock shall be fed out in sequence, which is all too time-consuming to be realistic with present-day communication systems, although it may well become a reality in the near future.

Starting from the presumption that a picture or exposure may not be larger than 10 MB and that ten percent of the material is updated daily, there would be required a communication system that can handle transmission speeds of at least 1.75 MB/minute. Although a cable-carried solution such as ISDN, which in a four-channel version manages two MB/minute, or fixed lines of the same capacity as an alternative to radio transmissions, such systems are at the moment enormously expensive to run, since the channels must be open all day round, meaning that at present radio transmission is a cost-effective method with regard to the communications interface 14.

The transmission rate of present digital information systems corresponds to 100 Mbits/s, in parity with new Ethernet® solutions. This is preferred for the inventive solution, and a ready developed Ethernet® solution can be used on the stations 16, 18, 20 between the station computer 34 and the projector computers 38.

One assumption in this regard is that all computers 32, 38 are able to handle PCI Ethernet® cards (Personal Computer Interface), which is the case with all new Power Macintosh®.

100 Mbits Ethernet® assumes ideal conditions with minimum disturbing or interfering magnetic fields, optimal cables, no abrupt swings with the cables, etc. Such factors seriously disturb and reduce the transmission rate. Despite these obstacles, the actual brake block is the own central SCSI bus (Small Computer System Interface) of the projector computer 38 to which the projector 22 should be connected. The transmission maximum of present-day SCSI busses is about 5-7 MB/s. This means that two seconds are required to move a picture or exposure of 10 MB from the station computer 34 to the projector computer 22.

The fastest Macintosh® servers at present manage clock frequencies, with accelerator cards, of about 160 MHz. This is sufficient to divide up a Quick Time® film or video film in real time, for instance. The computers also have a built-in stereo, 44 kHz, which produces sound of CD-quality. Naturally, CD rom and Audio CD and, e.g., Kodak® photo CD can be used in the system. On the basis that pictures or exposures have, on average, a size of 10 MB, 2500 exposures
will require 25 GB storage media. External disks can be used to this end, for instance. This large storage capacity is primarily only required for the control centre 12. The station computer 34 may have a smaller storage capacity and is supplied with fresh material during the day. This latter is effected by virtue of the function control reporting to the control centre 12 when a picture has been shown, the nature of the picture, where the picture was shown and for how long. The picture is then erased. When fewer picture remain, the control centre 12 automatically sends the next picture or exposure packet. This method enables the projector computer 22 to work effectively with a still smaller storage capacity. On the other hand, the projector 22 is equipped with a buffer memory for at least two pictures or exposures. When a picture or exposure has been shown, the picture or exposure is scrapped and leaves room for the next picture, this picture being sent from the station computer 24 during the time that picture number 2 is exposed. This avoids a two-second delay that would otherwise occur in transmission, in which case the screen would be blank or switched off during this time period.

Present-day Power Macintosh® servers manage these requirements. However, the development of server performance is advancing at great speed, and it is therefore to be expected that servers having still better performances will be available within a year.

Alternative servers 1, 2, 3 are SUN® servers or an Alpha® from Digital® . Although these servers operate under UNIX® and Windows® respectively, this does not affect the users, who are able to work under MAC OS® . A further important resource for the future is the Apple® system Copland® which is expected to be made commercially available this year. The most important advantages consist in multitasking and open transport. For instance, multitasking permits copying to several different servers at the same time as another program is processed. Consequently, when the server is sufficiently powerful, only from one to two servers is required in the control centre 12, instead of three servers 1, 2, 3 as is now the case. Furthermore, a server is able to serve the exposure means, screens, cloths, wall surfaces of an entire station, and the projector computers 38 can therewith be omitted, this being included in an alternative embodiment of the present invention as before mentioned. Open Transport permits communication via modems with several users connected to the same computer.

For achieving a purposeful digital information system according to the present invention, there is used to this end specifically developed software, which will not be described in more detail here.

There are available at present programs such as Powerpoint® and similar programs, which will not function effectively for three reasons. The programs are very large and load the computers unnecessarily. These programs also contain a large amount of resources that are not required to show pictures or exposures. For instance, advertising exposure also differs greatly from picture or exposure presentations of the Powerpoint® type. Powerpoint® thus lack resources that advertising agencies may wish to use. Primarily morphing, which is used progressively more often in advertising programs, for instance in television broadcasting. Morphing is a process in which the image of one object is smoothly changed into that of another object, for instance human beings to animals and/or vice versa. It must be possible to present the picture sequences to be shown in a manner more interesting than solely a diapositive presentation, this being one of the objects achieved with the invention. This touches on the border region between still pictures, moving pictures and film where the methods overlap one another. It is also probable that external mediators 24 of picture or exposure presentations will use sound. It is therefore wiser to write specific software which includes those resources that external mediators 24 desire, i.e. cultivate software. It will also be easier to update an own developed program with own resources at a future date.

In this way, the external mediators 24 do not need to bind themselves to the use of the Powerpoint® format. They simply deliver pictures in desired formats. However, it may be necessary to limit the size of a picture or exposure.

In order to achieve the inventive digital information system, it is necessary to provide a number of drive routine means, such as communication drive routine means for transferring information between external mediators 24 and the control centre 12, copying means for copying to the various databases 30, 36, drive routine means for composing the picture or exposure material to be shown, exposure handlers, drive routine means for a radio network, control means in the station computer 34 which feed pictures or exposures to the projector computers 38 in accordance with the exposure list, function control means in the projector computers 38 and in the station computers 34, drive routine means which interrupt a display when the display screen is hidden from projectors 22, and drive routine means for projectors 22. Effective programs exist for copying between the different databases, for instance Retrospect®.

The drive routine means which interrupts the showing of exposures when the exposure means is hidden from the projector 22, or vice versa, can also be used as feedback and monitoring in statistical analyses of the subway administrator in the present invention as to whether or not trains are running in accordance with the timetable, this being of interest for drawing up the exposure list and future updating of said list, among other things. This is effected by registration in the station computer 34 when a picture or exposure showing is interrupted. Registration may be effected, for instance, via brake routines for the computer 34. The registration may also trigger a clock (counter, timer) to register the time during which a vehicle obstructs the screen or the projector 22 respectively.

In yet another embodiment of the present invention, the central computer 28 comprises a relation database and/or, for example, a video server of the type Oracle ® which is able to optimally manage pictures and films. The central computer 28 is connected 14 to network computers 34, 38 which control each one projector 22. Every projector 22 or network computer 34, 38 has a TCP/IP address (Transmission Control Protocol/ Internet Protocol) and are able to be addressed by the central computer 28 and vice versa.

TCP/IP is a transmission and Internet protocol which de facto is a network standard. It is commonly used in connection with X.25 and Ethernet ® connections and is regarded as one of few protocols which provide a true connection to OSI (Open Systems Interconnection).

The TCP/IP address allows addressing of unique output data such as pictures to every projector 22, respectively.

With the existing Oracle ® relation database the comprised accounting or statistic software for invoicing of purchased advertising time can be used.

A relation database is a type of database system where all the data is stored together with indications of specific connections (relations) between stored information which simplifies searching, printing, sorting etc. in the database 30 or outputs from it.

The basis of the system is comprised by the relation database 30. In the database 30 pictures are stored which are to be displayed or otherwise used. A control system is provides a master unit to the database 30 which controls displaying of pictures to the concerned projectors 30 in the network 10.

In order to be able to achieve that every object, for example, information displayed by projectors 22, that is used is possible to address, every projector is in need of an unique address, for example, a TCP/IP number. This accomplishes that every object can be individually addressed. Additionally, projectors 22 are connected to a control computer 34, 38. Here, it is possible to use, for example a network computer (NC) as control computer 34.

Every NC may comprise or include a so called smart card reader. On smart cards addresses are stored to projectors 22, respectively. It is of course possible to group the addresses in order to generate series of objects as information with or without pictures, i.e. the same information to a lot of addresses.

Further, the present invention may comprise an interface to Internet for catching of information from Internet or storing and displaying in Internet.

It is a known problem when new films or movies are to be released att different locations such as cinemas that there are pirate copies made when the movies or films are distributed to the locations where they are going to be displayed to the public. The present invention can be used for distribution of newly released movies or films from the control centre 12 to, for example, cinemas 16, 18, 20 thereby reducing the risk for pirate copying.

Movies or films can be sent in a packed format from the control centre 12 an unpacked at the cinemas 16, 18, 20, thus further minimizing the risk for pirate copying.

Another embodiment of the present invention provides that advertisement sent at cinemas during the projection of a movie or film is instantly changeable with the method and the arrangement according to the above description .

Also, for advertisement on television the same problems and drawbacks as for other systems are valid e.g. concerning changing of advertisement spots. The present invention solves the problems concerning changing of advertisement spots in real time by, for example, letting the places 16, 18, 20 being situated at corporations broadcasting television. If it is a major broadcasting corporation, the control centre 12 can be placed in the producers locations and the stations 16, 18, 20 each used for different TV channels.

Alternatively, a television set could be given a unique network address in the system according to the present invention, whereby the television set constitutes the projector 22. This accomplishes that every tv-set can be individually addressed.

It will be understood that the aforedescribed embodiments of the present invention are not intended to limit the scope of the invention, but are merely intended as preferred modes of carrying out the invention. The invention includes other embodiments apparent to the person skilled in this art from the scope of the following Claims.

## Claims

1. A method of coordinating and controlling projectors or electronic displays in a digital information system (10) for exposing information on at least one display device through the medium of at least one projector or electronic display (22), wherein the information is displayed in places (16, 18, 20) accessible to and frequented by a general public, wherein subscribing information mediators (24) are connected to a computerized control centre (12) via interfaces for data and telecommunication (26) for round-the clock transmission of information, wherein the control centre (12) has communication interfaces (14) against computerized devices (34, 38) situated in connection with said places (16, 18, 20) for coordinating and controlling projectors or electronic displays (22), wherein the control centre (12) creates and updates an exposure list in real time with control instruction fields via dynamic booking of information in time for exposure from mediators (24), having drive routine means connected to the subscription, for transmission of information in the system (10) via interfaces (26), wherein the exposure list with control instructions coordinates and controls the projectors or electronic displays (22) with regard to what shall be exposed, when it shall be exposed, where it shall be exposed and for how long it shall be exposed, whereby each projector or electronic display (22) is to be controlled, independently of other projectors or electronic displays, to receive information in accordance with the exposure list for exposure of respective projectors or electronic displays (22) through the computerized devices (34, 38).

2. A method according to Claim 1, **characterized in that** the system administrator is able to update the exposure list with elective information at any time whatsoever, wherein the dynamic booking can be changed or delayed.

3. A method according to Claims 1-2, **characterized in that** external information mediators (24) which do not have access to software in the exposure handler are provided with the possibility of having their picture material or exposure material processed by personnel serving the working stations (32).

4. A method according to Claims 1-3, **characterized in that** the drivers may be transparent for transmission of information with the drive routine means of the control centre (12).

5. A method according to Claims 1-4, **characterized in that** the projector or electronic display (22) interrupts exposure of information when the projector or electronic display (22) is obstructed or when its allocated exposure means are visually inaccessible on the general place.

6. A method according to Claims 1-5, **characterized in that** the projector lens is covered with a protective means when fearing or detecting the presence of dirt that may dirty the lens.

7. A method according to Claims 1-6, **characterized in that** projectors or electronic displays (22) are arranged in a projector computer (38) which controls and feeds exposures to the projectors or electronic displays (22) under the control of a station computer (34) included in said computerized devices (34, 38), wherein said projector computer has connected a buffer memory which is filled with subsequently arriving exposures while the exposure being presented at that moment in time by the projector or electronic display (22) is emptied from the buffer memory.

8. A method according to Claims 1-6, **characterized in that** a station computer (34) included in said computerized devices includes a projector computer (38) which controls and delivers exposures to the projectors or electronic displays (22), wherein the project computer has connected a buffer memory which is filled with subsequently arriving exposures while the exposure that is being presented by the projector or electronic display is erased from the buffer memory.

9. A method according to Claims 1-8, **characterized in that** a station computer (34) situated at a specific place and included in a computerized device includes databases (36); and **in that** information in the databases (36) relating to exposures in the exposure list is copied in databases of servers in a selected number of computerized devices (16, 18, 20) situated at some other place.

10. A method according to Claims 1-9, **characterized in that** the exposure list includes reserved instruction fields for updating control instructions via mediator interfaces (26).

11. A method according to Claims 1-10, **characterized in that** the control instructions are placed in a queue, or line, when the exposure list temporarily lacks instruction updating fields.

12. A method according to Claims 1-11, **characterized in that** a switch senses when a station computer (34) is out of function, wherein the projectors or electronic displays controlled by the station computer (34) are controlled by another station computer (34) situated at some other place (16, 18, 20).

13. A method according to Claims 3-12, **characterized in that** interruptions in exposure of information when the display device, or exposure means, is hidden from the projector (22), or when the projector or electronic display (22) is hidden, are used as "feedback" and monitoring in statistical analyses by a system administrator to ascertain whether or not vehicles are running to schedule.

14. A method according to any preceding Claim, **characterized in that** every projector or electronic display (22) is assigned an unique address.

15. A method according to Claim 14, **characterized in that** the addresses are of the type TCP/IP.

16. A method according to any one of Claims 14 and 15, **characterized in that** the addresses to projectors or electronic displays (22), respectively, are stored on a smart card which can be read by computerised means (34, 38) via in these comprised smart card readers.

17. An arrangement for coordinating and controlling projectors or electronic displays in a digital information system (10) for displaying information on at least one display device through the medium of at least one projector or electronic display (22), wherein the information is exposed, or displayed, at places (16, 18, 20) that are accessible to the public, the arrangement comprising
a computerized control centre (12) to which mediators (24) of information for exposure or display with subscription are connected to via interfacesfor data and telecommunication (26) for transmitting the information at any elected time whatsoever, wherein the control centre (12) has communication interfaces (14) against computerized devices (34, 38) situated in connection with said places (16, 18, 20) for coordinating and controlling projectors or electronic displays (22), wherein the control centre (12) functions, in real time and through the medium of an exposure handler (3), to create and update an exposure list having control instruction fields via dynamic booking of display information from mediators (24) having drive routine means connected to the subscription, for transmission of information in the system (10) via interfaces (26); wherein
the exposure list containing control instructions coordinates and controls projectors or electronic displays (22) in question with respect to what shall be exposed, where it shall be exposed, when it shall be exposed, and for how long it shall be exposed, whereby each projector or electronic display (22), independently of other projectors or electronic displays (22), receives information according to the exposure list for exposure, or display, by respective projectors or electronic displays (22) through the computerized devices (34, 38).

18. An arrangement according to Claim 17, **characterized in that** the system administrator (10) is able to update the exposure list with elective information at any time whatsoever, wherein the dynamic booking can be changed or delayed.

19. An arrangement according to Claims 17-18, **characterized in that** external information mediators (24) which do not have access to software in the exposure handler are provided with the possibility of having their picture material or exposure material processed by personnel serving the working stations (32).

20. An arrangement according to Claims 17-19, **characterized in that** said drive routine means possibly being transparent for transmission of information with the drive routine means of the control centre (12).

21. An arrangement according to Claims 17-20, **characterized in that** the projector or electronic display (22) interrupts exposure of information when the projector or electronic display is hidden or obstructed or when its allocated exposure means are visually unavailable in the public place.

22. An arrangement according to Claims 17-21, **characterized in that** the projector lens is covered by a protective device when fearing or detecting the presence of dirt that may reach the lens.

23. An arrangement according to Claims 17-22, **characterized in that** projectors or electronic displays (22) are arranged with a projector computer (38) which controls and feeds exposures to the projectors or electronic displays (22) controlled by a station computer (34) included in said computerized devices (34, 38), wherein said projector computer has a connected buffer memory which is filled with subsequently arriving exposures while the exposure displayed at that time by the projector or electronic display (32) is erased from the buffer memory.

24. An arrangement according to Claims 17-22, **characterized in that** a station computer (34) included in said computerized devices is provided with a projector computer (38) which controls and feeds exposures to the projectors or electronic displays (22), wherein the projector computer has a connected buffer memory which is filled with subsequently arriving exposures while the exposure displayed at that moment by the projector or electronic display is erased from the buffer memory.

25. An arrangement according to Claims 17-24, **characterized in that** a station computer (34) situated at a specific place and included in a computerized device includes databases (36); and **in that** information in the databases (36) relating to exposures in the exposure list is copied into databases of station computers (34) in an elected number of computerized devices (16, 18, 20) situated at some other place.

26. An arrangement according to Claims 17-25, **characterized in that** the exposure list includes reserved instruction fields for updating with control instructions via the mediator interfaces (26).

27. An arrangement according to Claims 17-26, **characterized in that** the control instructions are placed in a queue, or line, when the exposure list momentarily lacks instruction fields for updating instructions.

28. An arrangement according to Claims 17-27, **characterized by** a switch which detects when a station computer (34) is non-functional, in which case those projectors or electronic displays that are controlled by the non-functional station computer (34) are controlled by a station computer (34) situated at some other place (16, 18, 20).

29. An arrangement according to Claims 18-28, **characterized in that** interruptions in the display of information when the exposure means or projector or electronic display (22) is hidden may also be used as "feedback" and for monitoring in statistical analyses by a system administrator to ascertain whether or not vehicles are running according to the timetable.

30. An arrangement according to Claims 17-29, **characterized in that** every projector or electronic display (22) is assigned an unique address.

31. An arrangement according to Claim 30, **characterized in that** the addresses are of the type TCP/IP.

32. An arrangement according to any one of Claims 30 or 31, **characterized in that** the addresses to projectors or electronic displays (22), respectively, are stored on a smart card which can be read by computerised means (34, 38) via in these comprised smart card readers.

## Patentansprüche

1. Verfahren zur Koordination und Steuerung von Projektoren oder elektronischen Anzeigen in einem digitalen Informationssystem (10) zur Darstellung von Information auf wenigstens einer Anzeigeeinrichtung über das Medium wenigstens eines Projektors oder einer elektronischen Anzeige (22), wobei die Information an öffentlich zugänglichen und frequentierten Plätzen (16, 18, 20) anzeigbar ist, wobei angeschlossene Informationsvermittler (24) über Schnittstellen für Daten und Telekommunikation (26) für die rund-umdie-Uhr-Übertragung von Information mit einem computerisierten Steuerzentrum (12) verbunden sind, wobei das Steuerzentrum (12) Kommunikationsschnittstellen (14) gegenüber Computereinrichtungen (34, 38) aufweist, die in Verbindung mit den Orten (16, 18, 20) zur Koordination und Steuerung der Projektoren oder elektronischen Anzeigen (22) angeordnet sind, wobei das Steuerzentrum (12) eine Ausstrahlungsliste in Realzeit mit Steuerbefehlsfeldern über eine dynamische Buchung von Information rechtzeitig zur Ausstrahlung von den Vermittlern (24) erzeugt und aktualisiert, mit einer mit dem Anschluß verbundenen Ansteuerroutineneinrichtung, zur Übertragung von Information in dem System (10) über Schnittstellen (26),wobei die Ausstrahlungsliste mit Steuerbefehlen die Projektoren oder elektronischen Anzeigen (22) bezüglich dessen, was ausgestrahlt werden soll, wann es ausgestrahlt werden soll, wo es ausgestrahlt werden soll und wie lang es ausgestrahlt werden soll, koordiniert und steuert, wodurch jeder Projektor oder elektronische Anzeige (22) steuerbar ist, unabhängig von anderen Projektoren oder elektronischen Anzeigen, Information in Übereinstimmung mit der Ausstrahlungsliste zur Ausstrahlung auf den jeweiligen Projektoren oder elektronischen Anzeigen (22) über die Computereinrichtungen (34, 38) zu empfangen.

2. Verfahren gemäß Anspruch 1, **dadurch gekennzeichnet, daß** der Systemadministrator in der Lage ist, die Ausstrahlungsliste mit wählbarer Information zu jeder möglichen Zeit zu aktualisieren, wobei die dynamische Buchung geändert oder verzögert werden kann.

3. Verfahren nach Anspruch 1 oder 2, **dadurch gekennzeichnet, daß** externe Informationsvermittler (24), die keinen Zugang zu Software in der Ausstrahlungsverarbeitungseinrichtung haben, in die Lage versetzt werden, ihr Bildmaterial oder Ausstrahlungsmaterial durch Personal, das die Arbeitsstationen (32) bedient, verarbeiten zu lassen.

4. Verfahren nach einem der Ansprüche 1 bis 3, **dadurch gekennzeichnet, daß** die Treiber- bzw. Ansteuerroutinen transparent für die Übertragung von Information mit der Ansteuerroutineneinrichtung des Steuerzentrums (12) sein können.

5. Verfahren gemäß einem der Ansprüche 1 bis 4, **dadurch gekennzeichnet, daß** der Projektor oder die elektronische Anzeige (22) die Ausstrahlung von Information unterbricht, wenn der Projektor oder die elektronische Anzeige (22) beschädigt ist oder wenn dessen zugehörige Ausstrahlungseinrichtung in dem öffentlichen Ort visuell nicht zugänglich ist.

6. Verfahren gemäß einem der Ansprüche 1 bis 5, **dadurch gekennzeichnet, daß** die Projektorlinse mit einer Schutzeinrichtung abgedeckt wird, wenn die Anwesenheit von Schmutz, der die Linse verschmutzen könnte, gefürchtet oder erfaßt wird.

7. Verfahren gemäß einem der Ansprüche 1 bis 6, **dadurch gekennzeichnet, daß** die Projektoren oder elektronischen Anzeigen (22) in einem Projektorcomputer (38) angeordnet sind, der die Ausstrahlungen zu den Projektoren oder elektronischen Anzeigen (22) unter Steuerung eines Stationscomputers (34) steuert und liefert, der in den Computereinrichtungen (34, 38) enthalten ist, wobei der Projektorcomputer einen verbundenen Pufferspeicher aufweist, der mit den nachfolgend ankommenden Ausstrahlungen gefüllt wird, während die durch den Projektor oder die elektronische Anzeige (22) zu dem Zeitpunkt präsentierte Ausstrahlung aus dem Pufferspeicher geleert wird.

8. Verfahren gemäß einem der Ansprüchel bis 6, **dadurch gekennzeichnet, daß** ein in der Computereinrichtung enthaltener Stationscomputer (34) einen Projektorcomputer (38) enthält, der die Ausstrahlungen zu den Projektoren (22) steuert und liefert, wobei der Projektorcomputer einen verbundenen Pufferspeicher aufweist, der mit nachfolgend ankommenden Ausstrahlungen gefüllt wird, während die durch den Projektor oder die elektronische Anzeige präsentierte Ausstrahlung aus dem Pufferspeicher gelöscht wird.

9. Verfahren gemäß einem der Ansprüche 1 bis 8, **dadurch gekennzeichnet, daß** in einem an einem bestimmten Platz angeordneten und in einer Computereinrichtung enthaltenen Stationscomputer (34) Datenbanken (36) vorhanden sind, und daß Information in den Datenbanken (36), die sich auf Ausstrahlungen der Ausstrahlungsliste beziehen, auf Datenbanken von Servern einer ausgewählten Anzahl von Computereinrichtungen (16, 18, 20) kopiert wird, die an einem anderen Ort angeordnet sind.

10. Verfahren gemäß einem der Ansprüche 1 bis 9, **dadurch gekennzeichnet, daß** die Ausstrahlungsliste reservierte Befehlsfelder zur Aktualisierung von Steuerbefehlen über die Vermittlerschnittstellen (26) aufweist.

11. Verfahren gemäß einem der Ansprüche 1 bis 10, **dadurch gekennzeichnet, daß** die Steuerbefehle in einer Schlange oder Zeile angeordnet sind, wenn die Ausstrahlungsliste vorübergehend keine Befehlsaktualisierungsfelder aufweist.

12. Verfahren gemäß einem der Ansprüche 1 bis 11, **dadurch gekennzeichnet, daß** ein Schalter erfaßt, wenn ein Stationscomputer (34) nicht in Betrieb ist, wobei die durch den Stationscomputer (34) gesteuerten Projektoren oder elektronische Anzeigen durch einen anderen Stationscomputer (34), der an einem anderen Ort (16, 18, 20) angeordnet ist, gesteuert werden.

13. Verfahren gemäß einem der Ansprüche 3 bis 12, **dadurch gekennzeichnet, daß** Unterbrechungen der Informationsausstrahlung, wenn die Anzeigevorrichtung oder Ausstrahlungsvorrichtung von dem Projektor (22) verdeckt ist oder der Projektor oder die elektronische Anzeige (22) verdeckt ist, als Rückkopplung und zur Überwachung einer statistischen Analyse durch einen Systemadministrator genutzt werden, um sicherzustellen, ob die Geräte gemäß Zeitplan arbeiten oder nicht.

14. Verfahren gemäß einem der vorangehenden Ansprüche, **dadurch gekennzeichnet, daß** jedem Projektor (22) eine spezifische Adresse zugeordnet wird.

15. Verfahren gemäß Anspruch 14, **dadurch gekennzeichnet, daß** die Adressen vom Typ TCP/IP sind.

16. Verfahren gemäß Anspruch 14 oder 15, **dadurch gekennzeichnet, daß** die Adressen der jeweiligen Projektoren oder elektronischen Anzeigen (22) auf einer intelligenten Karte gespeichert werden, die durch die Computereinrichtungen (34, 38) mittels in diesen enthaltenen Kartenleseeinrichtungen gelesen werden können.

17. Anordnung zur Koordinierung und Steuerung von Projektoren oder elektronischen Anzeigen in einem digitalen Informationssystem (10) zur Anzeige von Information auf wenigstens einer Anzeigeeinrichtung über das Medium wenigstens eines Projektors oder einer elektronischen Anzeige (22), wobei die Information an der Öffentlichkeit zugänglichen Orten (16, 18, 20) angezeigt oder dargestellt wird, wobei die Anordnung ein computerisiertes Steuerzentrum (12) aufweist, mit dem Vermittler (24) von darzustellender oder anzuzeigender Information mit einem Anschluß über Schnittstellen für Daten und Telekommunikation (26) zur Übertragung der Information zu jeder beliebigen gewählten Zeit verbunden sind, wobei das Steuerzentrum (12) Kommunikationsschnittstellen (14) gegenüber Computereinrichtungen (34, 38) aufweist, die in Verbindung mit den Plätzen (16, 18, 20) zur Koordinierung und Steuerung der Projektoren oder elektronischen Anzeigen (22) angeordnet sind, wobei das Steuerzentrum (12) in Echtzeit und über das Medium einer Ausstrahlungsverarbeitungseinrichtung (3) arbeitet, um eine Ausstrahlungsliste mit Steuerbefehlsfeldern über eine dynamische Buchung von Anzeigeinformation durch die Vermittler (24) zu erzeugen und zu aktualisieren, mit einer mit dem Anschluß verbundenen Ansteuerroutinenvorrichtung, zur Übertragung von Information in dem System (10) über die Schnittstellen (26), wobei die Ausstrahlungsliste Steuerbefehle enthält und die betreffenden Projektoren oder elektronischen Anzeigen (22) bezüglich dessen, was ausgestrahlt werden soll, wo es ausgestrahlt werden soll, wann es ausgestrahlt werden soll und für wie lange es ausgestrahlt werden soll, koordiniert und steuert, wobei jeder Projektor oder elektronische Anzeige (22) unabhängig von anderen Projektoren oder elektronischen Anzeigen (22) Information entsprechend der Ausstrahlungsliste zur Ausstrahlung oder zur Anzeige durch die jeweiligen Projektoren oder elektronischen Anzeigen (22) über die Computereinrichtungen (34, 38) empfängt.

18. Anordnung gemäß Anspruch 17, **dadurch gekennzeichnet, daß** der Systemadministrator (10) in der Lage ist, die Ausstrahlungsliste mit ausgewählter Information zu beliebiger Zeit zu aktualisieren, wobei die dynamische Buchung geändert oder verzögert werden kann.

19. Anordnung nach einem der Ansprüche 17 oder 18, **dadurch gekennzeichnet, daß** externe Informationsvermittler (24), die keinen Zugang zu Software in der Ausstrahlungsverarbeitungseinrichtung haben, in die Lage versetzt sind, ihr Bildmaterial oder Ausstrahlungsmaterial durch Personal, das die Arbeitsstationen (32) bedient, verarbeiten zu lassen.

20. Anordnung nach einem der Ansprüche 17 bis 19, **dadurch gekennzeichnet, daß** die Ansteuerroutinen transparent für die Übertragung von Information mit der Ansteuerroutineneinrichtung des Steuerzentrums (12) sein können.

21. Anordnung gemäß einem der Ansprüche 17 bis 20, **dadurch gekennzeichnet, daß** der Projektor oder die elektronische Anzeige (22) die Ausstrahlung von Information unterbricht, wenn der Projektor oder die elektronische Anzeige abgedeckt oder beschädigt ist oder wenn die zugehörige Ausstrahlungseinrichtung an dem öffentlichen Ort visuell nicht zugänglich ist.

22. Anordnung gemäß einem der Ansprüche 17 bis 21, **dadurch gekennzeichnet, daß** die Projektorlinse durch eine Schutzeinrichtung abgedeckt ist, wenn die Anwesenheit von Schmutz, der die Linse erreichen kann, gefürchtet oder erfaßt wird.

23. Anordnung gemäß einem der Ansprüche 17 bis 22, **dadurch gekennzeichnet, daß** die Projektoren oder elektronischen Anzeigen (22) mit einem Projektorcomputer (38) angeordnet sind, der die Ausstrahlungen zu den Projektoren oder elektronischen Anzeigen (22) unter Steuerung eines Stationscomputers (34) steuert und liefert, der in den Computereinrichtungen (34, 38) enthalten ist, wobei der Projektorcomputer einen verbundenen Pufferspeicher aufweist, der mit den nachfolgend ankommenden Ausstrahlungen gefüllt ist, während die durch den Projektor oder elektronische Anzeige (22) zu dem Zeitpunkt präsentierte Ausstrahlung aus dem Pufferspeicher geleert wird.

24. Anordnung gemäß einem der Ansprüche 17 bis 22, **dadurch gekennzeichnet, daß** ein in der Computereinrichtung enthaltener Stationscomputer (34) einen Projektorcomputer (38) enthält, der die Ausstrahlungen zu den Projektoren oder elektronischen Anzeigen (22) steuert und liefert, wobei der Projektorcomputer einen verbundenen Pufferspeicher aufweist, der mit nachfolgend ankommenden Ausstrahlungen gefüllt wird, während die durch den Projektor präsentierte Ausstrahlung aus dem Pufferspeicher gelöscht wird.

25. Anordnung gemäß einem der Ansprüche 17 bis 24, **dadurch gekennzeichnet, daß** in einem an einem bestimmten Platz angeordneten und in einer Computereinrichtung enthaltenen Stationscomputer (34) Datenbanken (36) enthalten sind, und daß Information in den Datenbanken (36), die sich auf Ausstrahlungen der Ausstrahlungsliste bezieht, auf Datenbanken von Stationscomputern (34) einer ausgewählten Anzahl von Computereinrichtungen (16, 18, 20) kopiert wird, die an einem anderen Ort angeordnet sind.

26. Anordnung gemäß einem der Ansprüche 17 bis 25, **dadurch gekennzeichnet, daß** die Ausstrahlungsliste reservierte Befehlsfelder zur Aktualisierung von Steuerbefehlen über die Vermittlerschnittstellen (26) aufweist.

27. Anordnung gemäß einem der Ansprüche 17 bis 26, **dadurch gekennzeichnet, daß** die Steuerbefehle in einer Schlange oder Zeile angeordnet sind, wenn die Ausstrahlungsliste vorübergehend keine Befehlsaktualisierungsfelder aufweist.

28. Anordnung gemäß einem der Ansprüche 17 bis 27, **gekennzeichnet durch** einen Schalter, der erfaßt, wenn ein Stationscomputer (34) nicht in Betrieb ist, in welchem Fall diejenigen Projektoren oder elektronischen Anzeigen, die **durch** den betriebsuntüchtigen Stationscomputer (34) gesteuert werden, **durch** einen an einem anderen Ort (16, 18, 20) angeordneten Stationscomputer (34) gesteuert werden.

29. Anordnung gemäß einem der Ansprüche 18 bis 28, **dadurch gekennzeichnet, daß** Unterbrechungen der Informationsanzeige, wenn die Anzeigeeinrichtung oder der Projektor oder die elektronische Anzeige (22) verdeckt ist, als Rückkopplung und zur Überwachung in einer statistischen Analyse durch einen Systemadministrator verwendet werden können, um sicherzustellen, ob die Geräte gemäß dem Zeitplan arbeiten oder nicht.

30. Anordnung gemäß einem der Ansprüche 17 bis 29, **dadurch gekennzeichnet, daß** jedem Projektor oder elektronischen Anzeige (22) eine spezifische Adresse zugeordnet ist.

31. Anordnung gemäß Anspruch 30, **dadurch gekennzeichnet, daß** die Adressen vom Typ TCP/IP sind.

32. Anordnung gemäß Anspruch 30 oder 31, **dadurch gekennzeichnet, daß** die Adressen der jeweiligen Projektoren oder elektronischen Anzeigen (22) auf einer intelligenten Karte gespeichert sind, die durch die Computereinrichtungen (34, 38) mittels in diesem enthaltenen Kartenleseeinrichtungen gelesen werden können.

## Revendications

1. Procédé de coordination et de commande de projecteurs ou d'affichages électroniques dans un système d'informations numériques (10) pour exposer des informations sur au moins un dispositif d'affichage au moyen d'au moins un projecteur ou affichage électronique (22), dans lequel les informations sont affichées en des endroits (16, 18, 20) accessibles à et fréquentés par le grand public, dans lequel des médiateurs d'informations par abonnement (24) sont connectés à un centre de commande informatisé (12) par l'intermédiaire d'interfaces de données et de télécommunication (26) pour transmettre des informations vingt-quatre heures sur vingt-quatre, dans lequel le centre de commande (12) a des interfaces de communication (14) en liaison avec des dispositifs informatisés (34, 38) placés en connexion avec lesdits endroits (16, 18, 20) pour coordonner et commander des projecteurs ou affichages électroniques (22), dans lequel le centre de commande (12) crée et met à jour une liste d'expositions en temps réel avec des zones d'instructions de commande par l'intermédiaire d'une réservation dynamique d'informations de temps d'exposition venant des médiateurs (24), ayant des moyens formant programme d'actionnement connectés à l'abonnement, pour une transmission d'informations dans le système (10) par l'intermédiaire d'interfaces (26), dans lequel la liste d'expositions avec des instructions de commande coordonne et commande les projecteurs ou affichages électroniques (22) concernant ce qui doit être exposé, le moment auquel cela doit être exposé, l'endroit où cela doit être exposé et la durée pendant laquelle cela doit être exposé, de telle manière que chaque projecteur ou affichage électronique (22) puisse être commandé, indépendamment d'autres projecteurs ou affichages électroniques, pour recevoir des informations en fonction de la liste d'expositions pour l'exposition de projecteurs ou affichages électroniques respectifs (22) par l'intermédiaire des dispositifs informatisés (34, 38).

2. Procédé selon la revendication 1, **caractérisé en ce que** l'administrateur de système peut à n'importe quel moment mettre à jour la liste d'expositions avec des informations choisies, dans lequel la réservation dynamique peut être modifiée ou retardée.

3. Procédé selon les revendications 1-2, **caractérisé en ce que** des médiateurs d'informations externes (24) qui n'ont pas accès aux logiciels dans le gestionnaire d'exposition bénéficient de la possibilité de faire traiter leurs images ou leurs expositions par du personnel travaillant sur les stations de traitement (32).

4. Procédé selon les revendications 1-3, **caractérisé en ce que** les pilotes peuvent être transparents pour une transmission d'informations avec les moyens formant programme d'actionnement du centre de commande (12).

5. Procédé selon les revendications 1-4, **caractérisé en ce que** le projecteur ou affichage électronique (22) interrompt l'exposition d'informations quand le projecteur ou affichage électronique (22) est obstrué ou quand ses moyens d'exposition attribués sont visuellement inaccessibles sur le lieu public.

6. Procédé selon les revendications 1-5, **caractérisé en ce que** la lentille de projecteur est recouverte de moyens de protection quand on craint ou détecte la présence de saletés qui peuvent salir la lentille.

7. Procédé selon les revendications 1-6, **caractérisé en ce que** les projecteurs ou affichages électroniques (22) sont agencés dans un ordinateur pour projecteurs (38) qui commande et délivre les expositions aux projecteurs ou affichages électroniques (22) sous la supervision d'un ordinateur en station (34) faisant partie desdits dispositifs informatisés (34, 38), dans lequel ledit ordinateur pour projecteurs a une mémoire tampon connectée qui accueille les expositions arrivant ultérieurement pendant que l'exposition présentée juste à ce moment-là par le projecteur ou affichage électronique (22) est effacée de la mémoire tampon.

8. Procédé selon les revendications 1-6, **caractérisé en ce qu'**un ordinateur en station (34) faisant partie desdits dispositifs informatisés comprend un ordinateur pour projecteurs (38) qui commande et délivre des expositions aux projecteurs ou affichages électroniques (22), dans lequel l'ordinateur pour projecteurs a une mémoire tampon connectée qui accueille les expositions arrivant ultérieurement pendant que l'exposition qui est présentée par le projecteur ou affichage électronique est effacée de la mémoire tampon.

9. Procédé selon les revendications 1-8, **caractérisé en ce qu'**un ordinateur en station (34) placé à un endroit spécifique et faisant partie d'un dispositif informatisé comprend des bases de données (36) ; et **en ce que** les informations dans les bases de données (36) concernant des expositions dans la liste d'expositions sont copiées dans des bases de données des serveurs dans un nombre choisi de dispositifs informatisés (16, 18, 20) situés à un autre endroit.

10. Procédé selon les revendications 1-9, **caractérisé en ce que** la liste d'expositions comprend des zones d'instructions réservées pour mettre à jour des instructions de commande par l'intermédiaire d'interfaces de médiateurs (26).

11. Procédé selon les revendications 1-10, **caractérisé en ce que** les instructions de commande sont placées en file d'attente, ou en ligne, quand la liste d'expositions manque temporairement de zones de mise à jour d'instructions.

12. Procédé selon les revendications 1-11, **caractérisé en ce qu'**un commutateur détecte les moments où un ordinateur en station (34) est hors fonction, auquel cas les projecteurs ou affichages électroniques commandés par l'ordinateur en station (34) sont repris en main par un autre ordinateur en station (34) situé à un autre endroit (16, 18, 20).

13. Procédé selon les revendications 3-12, **caractérisé en ce que** des interruptions d'exposition d'informations quand le dispositif d'affichage, ou les moyens d'exposition, est caché du projecteur (22), ou quand le projecteur ou affichage électronique (22) est caché, sont utilisées comme moyen de "rétroaction" et de surveillance dans des analyses statistiques par un administrateur de système pour vérifier si des véhicules circulent ou non selon le programme.

14. Procédé selon l'une quelconque des revendications précédentes, **caractérisé en ce que** chaque projecteur ou affichage électronique (22) reçoit une adresse unique.

15. Procédé selon la revendication 14, **caractérisé en ce que** les adresses sont du type TCP/IP.

16. Procédé selon l'une quelconque des revendications 14 et 15, **caractérisé en ce que** les adresses respectives des projecteurs ou affichages électroniques (22) sont mémorisées sur une carte à mémoire qui peut être lue par des moyens informatisés (34, 38) par l'intermédiaire de lecteurs de carte à mémoire intégrés dans ceux-ci.

17. Agencement pour coordonner et commander des projecteurs ou affichages électroniques dans un système d'informations numériques (10) pour afficher des informations sur au moins un dispositif d'affichage au moyen d'au moins un projecteur ou affichage électronique (22), dans lequel les informations sont exposées, ou affichées, en des endroits (16, 18, 20) qui sont accessibles au public, l'agencement comprenant
un centre de commande informatisé (12) auquel des médiateurs (24) d'informations pour une exposition ou un affichage par abonnement sont connectés par l'intermédiaire d'interfaces de données et de télécommunication (26) pour transmettre les informations à tout moment choisi, dans lequel le centre de commande (12) a des interfaces de communication (14) en liaison avec des dispositifs informatisés (34, 38) placés en connexion avec lesdits endroits (16, 18, 20) pour coordonner et commander des projecteurs ou affichages électroniques (22), dans lequel le centre de commande (12) fonctionne, en temps réel et au moyen d'un gestionnaire d'exposition (3), de façon à créer et mettre à jour une liste d'expositions ayant des zones d'instructions de commande par l'intermédiaire d'une réservation dynamique d'informations d'affichage venant des médiateurs (24) ayant des moyens formant programme d'actionnement connectés à l'abonnement, pour une transmission d'informations dans le système (10) par l'intermédiaire d'interfaces (26), dans lequel
la liste d'expositions comprenant des instructions de commande coordonne et commande les projecteurs ou affichages électroniques (22) en question concernant ce qui doit être exposé, l'endroit où cela doit être exposé, le moment auquel cela doit être exposé et la durée pendant laquelle cela doit être exposé, de telle manière que chaque projecteur ou affichage électronique (22), indépendamment d'autres projecteurs ou affichages électroniques (22), reçoive des informations en fonction de la liste d'expositions pour une exposition, ou un affichage, par des projecteurs ou affichages électroniques respectifs (22) par l'intermédiaire des dispositifs informatisés (34, 38).

18. Agencement selon la revendication 17, **caractérisé en ce que** l'administrateur de système (10) peut à n'importe quel moment mettre à jour la liste d'expositions avec des informations choisies, dans lequel la réservation dynamique peut être modifiée ou retardée.

19. Agencement selon les revendications 17-18, **caractérisé en ce que** des médiateurs d'informations externes (24) qui n'ont pas accès aux logiciels dans le gestionnaire d'exposition bénéficient de la possibilité de faire traiter leurs images ou leurs expositions par du personnel travaillant sur les stations de traitement (32).

20. Agencement selon les revendications 17-19, **caractérisé en ce que** lesdits moyens formant programme d'actionnement peuvent être transparents pour une transmission d'informations avec les moyens formant programme d'actionnement du centre de commande (12).

21. Agencement selon les revendications 17-20, **caractérisé en ce que** le projecteur ou affichage électronique (22) interrompt une exposition d'informations quand le projecteur ou affichage électronique est caché ou obstrué ou quand ses moyens d'exposition attribués sont visuellement indisponibles sur le lieu public.

22. Agencement selon les revendications 17-21, **caractérisé en ce que** la lentille de projecteur est recouverte d'un dispositif de protection quand on craint ou détecte la présence de saletés qui peuvent atteindre la lentille.

23. Agencement selon les revendications 17-22, **caractérisé en ce que** les projecteurs ou affichages électroniques (22) sont agencés dans un ordinateur pour projecteurs (38) qui commande et délivre les expositions aux projecteurs ou affichages électroniques (22) commandés par un ordinateur en station (34) faisant partie desdits dispositifs informatisés (34, 38), dans lequel ledit ordinateur pour projecteurs a une mémoire tampon connectée qui accueille les expositions arrivant ultérieurement pendant que l'exposition affichée à ce moment-là par le projecteur ou affichage électronique (22) est effacée de la mémoire tampon.

24. Agencement selon les revendications 17-22, **caractérisé en ce qu'**un ordinateur en station (34) faisant partie desdits dispositifs informatisés est pourvu d'un ordinateur pour projecteurs (38) qui commande et délivre les expositions aux projecteurs ou affichages électroniques (22), dans lequel l'ordinateur pour projecteurs a une mémoire tampon connectée qui accueille les expositions arrivant ultérieurement pendant que l'exposition affichée à ce moment-là par le projecteur ou affichage électronique est effacée de la mémoire tampon.

25. Agencement selon les revendications 17-24, **caractérisé en ce qu'**un ordinateur en station (34) placé à un endroit spécifique et faisant partie d'un dispositif informatisé comprend des bases de données (36) ; et **en ce que** les informations dans les bases de données (36) concernant les expositions dans la liste d'expositions sont copiées dans les bases de données des ordinateurs en station (34) dans un nombre choisi de dispositifs informatisés (16, 18, 20) situés à un autre endroit.

26. Agencement selon les revendications 17-25, **caractérisé en ce que** la liste d'expositions comprend des zones d'instructions réservées pour mettre à jour des instructions de commande par l'intermédiaire des interfaces de médiateurs (26).

27. Agencement selon les revendications 17-26, **caractérisé en ce que** les instructions de commande sont placées en file d'attente, ou en ligne, quand la liste d'expositions manque momentanément de zones d'instructions pour mettre à jour des instructions.

28. Agencement selon les revendications 17-27, **caractérisé en ce qu'**un commutateur détecte les moments où un ordinateur en station (34) est hors fonction, auquel cas les projecteurs ou affichages électroniques qui sont commandés par l'ordinateur en station hors fonction (34) sont repris en main par un ordinateur en station (34) situé à un autre endroit (16, 18, 20).

29. Agencement selon les revendications 18-28, **caractérisé en ce que** les interruptions d'affichage d'informations quand les moyens d'exposition, ou le projecteur ou affichage électronique (22), sont cachés, peuvent également être utilisées comme moyen de "rétroaction" et de surveillance dans des analyses statistiques par un administrateur de système pour vérifier si des véhicules circulent ou non selon le programme.

30. Agencement selon les revendications 17-29, **caractérisé en ce que** chaque projecteur ou affichage électronique (22) reçoit une adresse unique.

31. Agencement selon la revendication 30, **caractérisé en ce que** les adresses sont du type TCP/IP.

32. Agencement selon l'une quelconque des revendications 30 et 31, **caractérisé en ce que** les adresses respectives des projecteurs ou affichages électroniques (22) sont mémorisées sur une carte à mémoire qui peut être lue par des moyens informatisés (34, 38) par l'intermédiaire de lecteurs de carte à mémoire intégrés dans ceux-ci.
